# EUROPEAN PATENT SPECIFICATION

(11) **EP 4 459 769 B1**
(45) Date of publication and mention of the grant of the patent: **17.06.2026**
(21) Application number: 23863320.0
(22) Date of filing: 10.07.2023
(51) Int. Cl.: H01M 50/367, H01M 50/383, H01M 50/30, H01M 50/249, H01M 10/613, H01M 10/625, H01M 10/6551

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 06.09.2022 KR 20220112577
(43) Date of publication of application: 06.11.2024
(73) Proprietor: LG Energy Solution, Ltd., Seoul 07335 (KR)
(72) Inventor: SEO, Sung-Won, Daejeon 34122 (KR); LEE, In-Je, Daejeon 34122 (KR); CHUNG, Se-Yun, Daejeon 34122 (KR); RASHID, Muhammad, Daejeon 34122 (KR); KIM, Sung-Tae, Daejeon 34122 (KR); TANNENBERGER, Guenter, 85123 Pobenhausen (DE); WASSERMANN, Thomas, 85290 Geisenfeld (DE); HARASZTOSI, Uwe, 74172 Neckarsulm (DE)
(74) Representative: Plasseraud IP
(86) International application number: PCT/KR2023/009792
(87) International publication number: WO 2024/053839

(56) References cited:
- EP-A1- 4 030 535
- JP-A- 2021 048 113
- JP-A- 2021 048 113
- KR-A- 20210 114 752
- KR-A- 20210 134 972
- KR-A- 20210 134 972
- KR-A- 20220 095 224
- KR-B1- 100 684 769

## Description

### TECHNICAL FIELD

The present application claims priority to Korean Patent Application No. 10-2022-0112577 filed on September 6, 2022 in the Republic of Korea.

The present disclosure relates to a battery pack and a vehicle including the same, and more particularly, to a battery pack configured to ensure structural stability even when a thermal event occurs, and a vehicle including the same.

### BACKGROUND ART

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus have advantages of free charge/discharge, very low self-discharge rate, and high energy density.

A lithium secondary battery mainly uses a lithium-based oxide and a carbon material as a positive electrode active material and a negative electrode active material, respectively. In addition, the lithium secondary battery includes an electrode assembly in which a positive electrode plate and a negative electrode plate coated with the positive electrode active material and the negative electrode active material, respectively are disposed with a separator interposed therebetween, and a casing for sealing and accommodating the electrode assembly along with an electrolyte.

Meanwhile, depending on the shape of the battery case, lithium secondary batteries may be classified into a can-type secondary battery in which an electrode assembly is embedded in a metal can, and a pouch-type secondary battery in which an electrode assembly is embedded in a pouch of an aluminum laminate sheet. In addition, the can-type secondary battery can be further classified into a cylindrical battery and a prismatic battery according to the shape of the metal can.

Here, the pouch of the pouch-type secondary battery can be largely classified into a lower sheet and an upper sheet covering it. At this time, an electrode assembly formed by stacking and winding a positive electrode, a negative electrode, and a separator is stored in the pouch. In addition, after receiving the electrode assembly, the edges of the upper sheet and the lower sheet are sealed by thermal fusion or the like. In addition, an electrode tab drawn out from each electrode may be coupled to an electrode lead, and an insulating film may be added to a portion of the electrode lead in contact with the sealing portion.

In this way, the pouch-type secondary battery can have the flexibility to be configured in various forms. In addition, the pouch-type secondary battery has the advantage of being able to implement a secondary battery of the same capacity with a smaller volume and mass.

The lithium secondary batteries are used to construct a battery module or a battery pack by stacking a plurality of battery cells themselves or in a cartridge to form a densely packed structure and electrically connecting them to provide high voltage and high current.

In the battery pack, typically, one of the important issues is safety. In particular, when a thermal event occurs in any of the battery cells included in the battery pack, it is necessary to suppress the propagation of the event to the other battery cell.

Unless thermal propagation between the battery cells is properly suppressed, the thermal event may spread to the other battery cell included in the battery pack, causing a greater problem such as a fire or explosion in the battery pack. Moreover, the fire or explosion in the battery pack may cause human and economic loss and damage. EP 4 030 535 relates to a box body, a battery, an electric apparatus and a manufacturing method of the battery. Accordingly, the battery pack needs a configuration for properly controlling the thermal event.

### DISCLOSURE

### Technical Problem

The present disclosure is designed to solve the problems of the related art, and therefore the present disclosure is directed to providing a battery pack configured to ensure structural stability even when a thermal event occurs, and a vehicle including the same.

However, the technical problem to be solved by the present disclosure is not limited to the above-mentioned problem, and other problems not mentioned will be clearly understood by those skilled in the art from the present disclosure described below.

### Technical Solution

A battery pack according to one aspect of the present disclosure comprises a battery cell; a pack housing configured to accommodate the battery cell within a cell accommodation portion and have a venting path including a first path and a second path composed of two layers in communication with the cell accommodation portion at a side and a lower part, respectively; and a cooling module provided to the lower part of the pack housing and configured to cool a venting gas or flame discharged from the battery cell and introduced into the second path.

The pack housing includes a side frame configured to constitutes the side of the pack housing and have the first path that communicates with the cell accommodation portion through a distribution hole; and a floor frame connected to the side frame and configured to constitute the lower part of the pack housing and have the second path that communicates with the cell accommodation portion through a venting hole.

The second path includes an upper path configured to communicate with the cell accommodation portion through the venting hole; and a lower path disposed below the upper path and configured to communicate with the upper path.

In an embodiment, the cooling module may include a first cooling unit; and a second cooling unit disposed on the opposite side of the first cooling unit within the floor frame with the upper path interposed therebetween.

In an embodiment, the lower path may be located below the cooling module.

The battery cell has an electrode lead provided on at least one side to face the venting path, and the venting hole is formed in an area on the floor frame corresponding to the electrode lead.

In an embodiment, the length of the venting hole in the front and rear directions of the pack housing may be shorter than the length of the upper path in the front and rear directions of the pack housing.

In an embodiment, the pack housing may further include a first guide portion formed by bending from a part of the venting hole toward the inside of the upper path; and a second guide portion formed by bending from another part of the venting hole toward the inside of the lower path.

In an embodiment, the pack housing may further include a flow limiting portion provided on at least one of one side and the other side of the lower path and configured to collide with particles contained in the flame.

In an embodiment, the pack housing may further include a filtering portion provided within the second path and configured to filter particles contained in the flame, and the filtering portion may be configured to surround the cooling module within the upper path and the lower path.

In an embodiment, the battery cell may be provided in plurality, the cell accommodation portion may be provided in plurality, the plurality of battery cells may be accommodated within the plurality of cell accommodation portions, respectively, and the pack housing may further include a plurality of barriers having both sides connected to the side frame and configured to be in close contact with the front or rear of any one of the plurality of battery cells to seal the plurality of cell accommodation portions from each other.

In addition, a vehicle according to another aspect of the present disclosure comprises at least one battery pack according to an aspect of the present disclosure.

### Advantageous Effects

According to an embodiment of the present disclosure, the flow of venting gas and/or flame can be guided in a certain direction. Accordingly, it is possible to minimize or prevent simultaneous ignition of a plurality of battery cells by preventing thermal runaway or flame propagation between battery cells.

In addition, according to an embodiment of the present disclosure, the venting path is configured on the side and lower part of the pack housing, respectively, so that the flow of venting gas and/or flame, which has strong straightness, is primarily directed to the side of the pack housing, and the flow of the remaining venting gas and/or flame can be guided to the lower part of the pack housing and cooled. Accordingly, it is possible to minimize or prevent high temperature venting gas and/or flame from being rapidly discharged outside the pack housing.

In addition, according to this embodiment of the present disclosure, since the second path of the venting path is composed of two layers, the effect of cooling the venting gas and/or flame can be maximized while further weakening the flow of the venting gas and/or flame.

In addition, according to an embodiment of the present disclosure, since the venting gas and/or flame can be cooled in the lower part of the pack housing, it is possible to minimize or prevent the venting gas and/or flame from being directed toward the driver's side located above the battery pack.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a drawing to explain the detailed structure of the battery pack of FIG. 1.
FIG. 3 is an exploded perspective view showing the battery pack of FIG. 1.
FIG. 4 is a diagram showing a battery cell provided in the battery pack of FIG. 1.
FIG. 5 is a diagram showing a part of the pack housing provided in the battery pack of FIG. 1.
FIG. 6 is a cross-sectional view showing the battery pack in the direction A-A' of FIG. 1.
FIG. 7 is a cross-sectional view showing the battery pack in the direction B-B' of FIG. 1.
FIGS. 8 and 9 are diagrams illustrating a state in which venting gas or flame is emitted during thermal runaway of a battery cell in the battery pack according to an embodiment of the present disclosure.
FIGS. 10 and 11 are diagrams showing a battery pack according to the second embodiment of the present disclosure.
FIG. 12 is a diagram showing a battery pack according to the third embodiment of the present disclosure.
FIGS. 13 and 14 are diagrams showing a battery pack according to the fourth embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

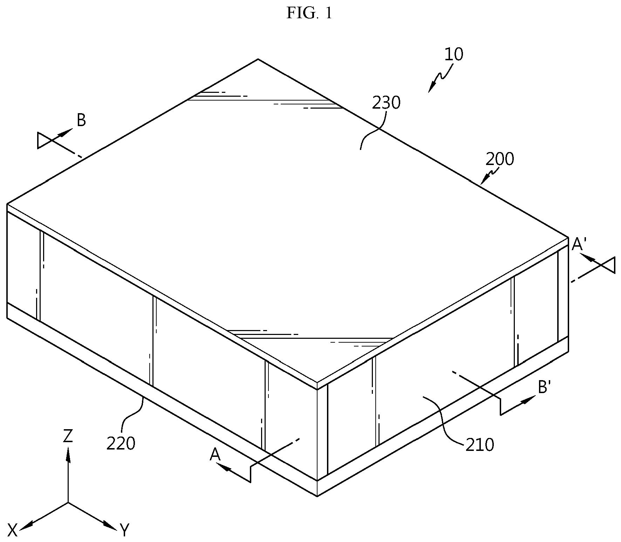

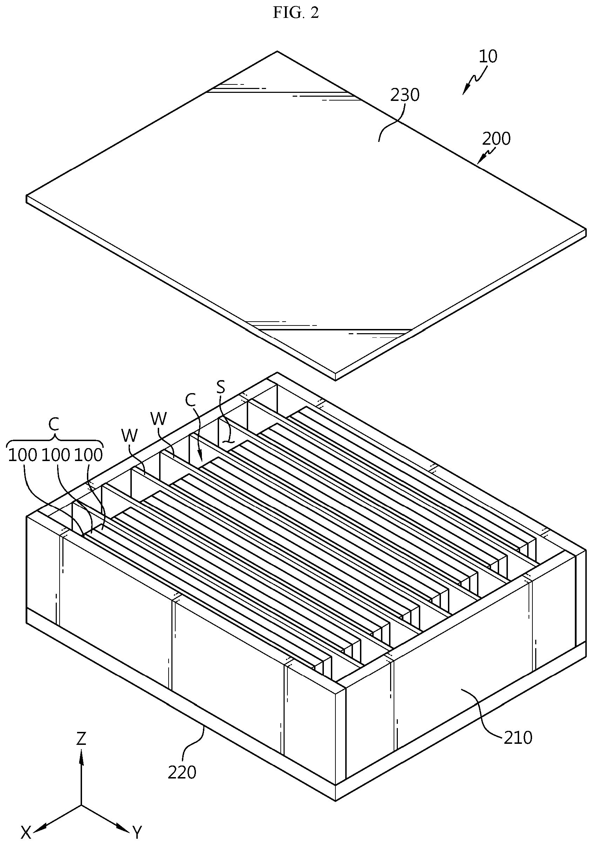

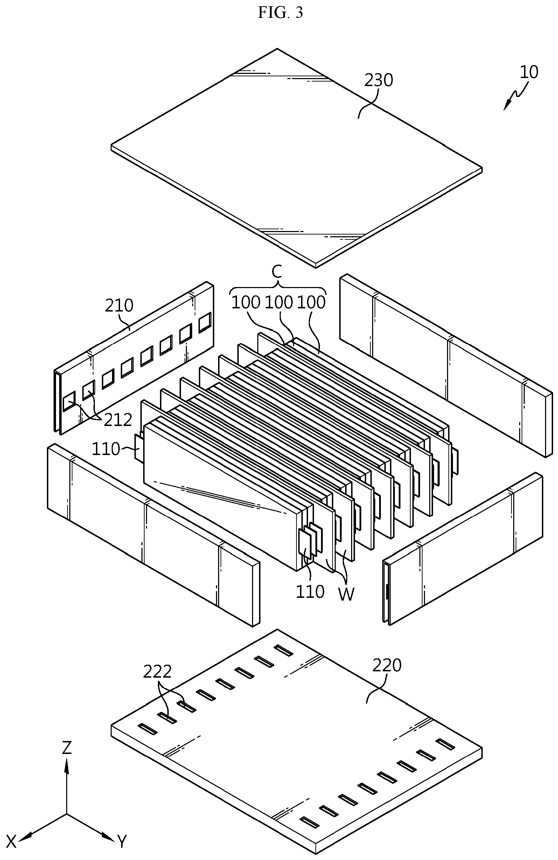

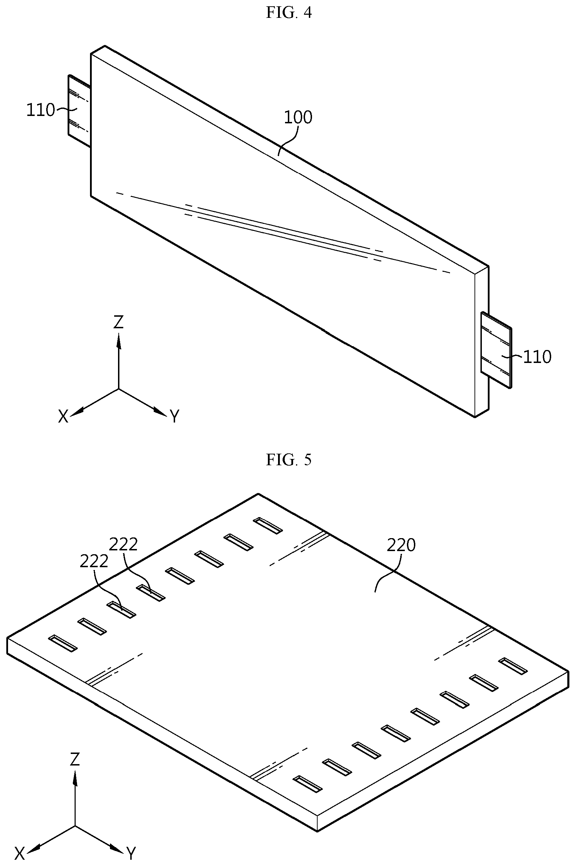

FIG. 1 is a diagram showing a battery pack 10 according to an embodiment of the present disclosure, FIG. 2 is a drawing to explain the detailed structure of the battery pack 10 of FIG. 1, FIG. 3 is an exploded perspective view showing the battery pack 10 of FIG. 1, and FIG. 4 is a diagram showing a battery cell 100 provided in the battery pack 10 of FIG. 1.

In the embodiment of the present disclosure, the X-axis direction shown in the drawings may mean front and rear directions of the battery pack 10, which will be described later, the Y-axis direction may mean left and right directions of the battery pack 10 perpendicular to the X-axis direction on the horizontal plane (XY plane), and the Z-axis direction may mean upper and lower directions perpendicular to both the X-axis direction and the Y-axis direction.

Referring to FIGS. 1 to 4, the battery pack 10 according to an embodiment of the present disclosure may include a battery cell 100 and a pack housing 200.

The battery cell 100 may refer to a secondary battery. This battery cell 100 may be prepared as a pouch-type battery cell, a cylindrical battery cell, or a prismatic battery cell. As an example, the battery cell 100 may be a pouch-type battery cell. Additionally, an electrode lead 110 may be provided on at least one side (Y-axis direction) of the battery cell 100.

Meanwhile, two or more battery cells 100 may be provided to form a cell assembly C. At this time, the battery cells 100 may be stacked in one direction (e.g., X-axis direction) to form the cell assembly C.

The pack housing 200 may be configured to accommodate the battery cell 100 therein. For this purpose, a cell accommodation portion S may be formed in the pack housing 200. The cell accommodation portion S is an empty space and may be provided in a shape that can accommodate at least one battery cell 100 therein. Specifically, the cell accommodation portion S may be provided in a shape that can accommodate the battery cell 100 therein through a barrier W, which will be described later. Meanwhile, the pack housing 200 may include a material with strong heat resistance and rigidity.

Specifically, the pack housing 200 may include a side frame 210, a floor frame 220, and an upper cover 230.

The side frame 210 may configure the side of the pack housing 200. As an example, the side frame 210 may configure the side of the pack housing 200 in the front and rear directions (X-axis direction) and the side of the pack housing 200 in the left and right directions (Y-axis direction).

The floor frame 220 constitutes the lower part of the pack housing 200 and may be connected to the lower part of the side frame 210.

The upper cover 230 is coupled to the upper part of the side frame 210 and may cover the upper side of the battery cell 100 accommodated inside the pack housing 200. At this time, a heat transfer material (not shown) may be provided on the lower part of the upper cover 230.

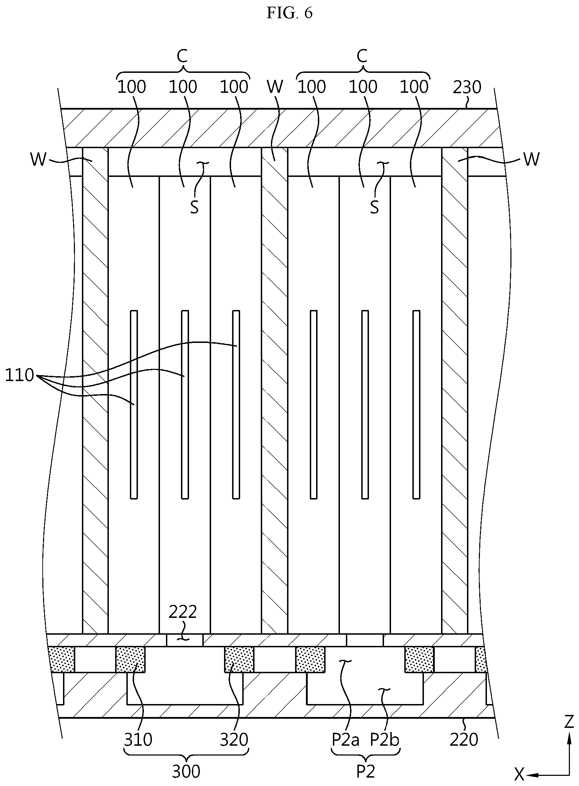

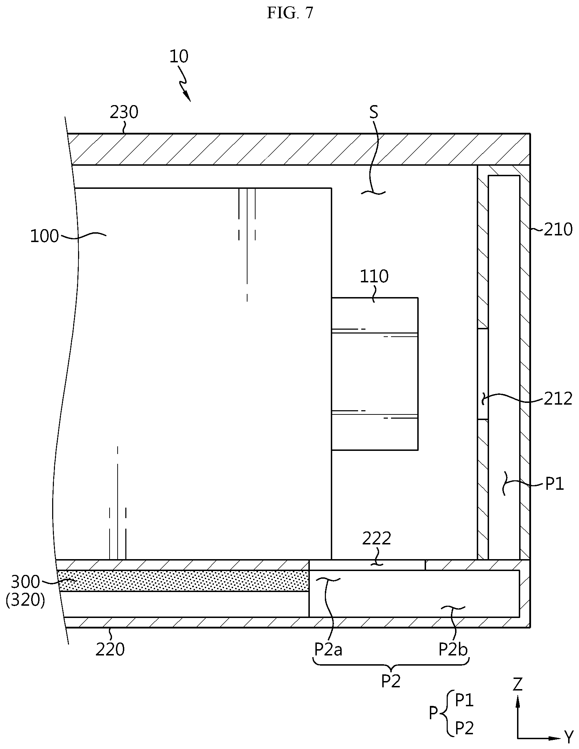

FIG. 5 is a diagram showing a part of the pack housing 200 provided in the battery pack 10 of FIG. 1, FIG. 6 is a cross-sectional view showing the battery pack 10 in the direction A-A' of FIG. 1 (in detail, FIG. 6 is a cross-sectional view of the battery pack 10 of FIG. 1 with respect to the XZ plane based on A-A' line), and FIG. 7 is a cross-sectional view showing the battery pack 10 in the direction B-B' of FIG. 1 (in detail, FIG. 7 is a cross-sectional view of the battery pack 10 of FIG. 1 with respect to the YZ plane based on B-B' line).

Referring to FIGS. 5 to 7, the pack housing 200 may have a venting path P.

The venting path P may include a first path P1 and a second path P2 in communication with the cell accommodation portion S at the side and the lower part of the pack housing 200, respectively. That is, the first path P1 may be configured in the side frame 210 and communicate with the cell accommodation portion S.

In addition, the second path P2 may be configured in the floor frame 220 and communicate with the cell accommodation portion S. At this time, the second path P2 may be composed of two layers in the upper and lower directions within the floor frame 220.

Additionally, the battery pack 10 according to an embodiment of the present disclosure may further include a cooling module 300.

The cooling module 300 may be installed at the lower part (floor frame 220) of the pack housing 200. As an example, the cooling module 300 may be a heat sink.

In a typical battery pack, events such as thermal runaway may occur in certain battery cells. In this case, high-temperature and high-pressure venting gas may be generated from a specific battery cell, and when this venting gas meets oxygen, a flame may be generated inside or outside the battery pack.

In addition, there is a high risk that the flame generated in one battery cell will transfer to another battery cell adjacent to one battery cell, and thus, simultaneous ignition of a plurality of battery cells may occur.

The battery pack 10 of the present disclosure can solve the above-mentioned problems by being equipped with the venting path P of the pack housing 200 and the cooling module 300 as described above. Specifically, the venting path P may be configured to guide the discharge of venting gas and/or flame to the outside of the pack housing 200. In other words, the venting path P may provide a flow space so that the venting gas and/or flame discharged from the battery cell 100 can be discharged to the outside of the pack housing 200.

Specifically, the first path P1 may be provided on the side frame 210 and configured to face the electrode lead 110 of the battery cell 100 in the left and right directions (Y-axis direction) of the pack housing 200. Since the first path P1 may be configured to face the electrode lead 110 in this way, venting gas and/or flame with strong straightness may primarily flow into the first path P1 when the battery cell 100 thermally runs away. The venting gas and/or flame flowing into the side frame 210 through first path P1 in this way may collide with the inner surface of the side frame 210 and weaken its flow. As an example, a flame may contain particles. The particles are high-temperature active material particles or sparks discharged from the battery cell 100, and may be an ignition source.

Additionally, the cooling module 300 may be configured to cool the venting gas and/or flame discharged from the battery cell 100 and introduced into the second path P2.

Specifically, the venting gas and/or flame discharged from the battery cell 100, excluding the venting gas and/or flame flowing into the first path P1, may be introduced into the second path P2 provided in the floor frame 220. The venting gas and/or flame introduced into the second path P2 in this way is cooled by the cooling module 300, and its flow may be weakened as the venting gas and/or flame flows within the second path P2.

At this time, the second path P2 may be composed of two layers in the upper and lower directions within the floor frame 220, as described above. Therefore, as the venting gas and/or flame introduced into the second path P2 flows from the first layer of the second path P2 to the second layer or from the second layer of the second path P2 to the first layer, the flow may become weaker. Additionally, as the venting gas and/or flame flows in two layers, the contact time with the cooling module 300 can be increased.

Meanwhile, although not shown in detail, the side frame 210 may include a discharge hole. This discharge hole may be configured to communicate with the first path P1 to discharge venting gas and/or flame to the outside of the pack housing 200. Additionally, the floor frame 220 may include a discharge hole. This discharge hole may be configured to communicate with the second path P2 to discharge venting gas and/or flame to the outside of the pack housing 200.

According to this embodiment of the present disclosure, the flow of venting gas and/or flame can be guided in a certain direction. Accordingly, it is possible to minimize or prevent simultaneous ignition of a plurality of battery cells 100 by preventing thermal runaway or flame propagation between the battery cells 100.

In addition, according to this embodiment of the present disclosure, the venting path P is provided at the side and the lower part of the pack housing 200, so that the flow of venting gas and/or flame, which has strong straightness, is primarily directed to the side of the pack housing 200, and the flow of the remaining venting gas and/or flame is guided to the lower part of the pack housing 200 to be cooled. Accordingly, it is possible to minimize or prevent high temperature venting gas and/or flame from being rapidly discharged to the outside of the pack housing 200.

In addition, according to this embodiment of the present disclosure, since the second path P2 of the venting path P is composed of two layers, it is possible to maximize the effect of cooling the venting gas and/or flame while weakening the flow of venting gas and/or flame.

Additionally, according to this embodiment of the present disclosure, since the venting gas and/or flame can be cooled at the lower part of the pack housing 200, it is possible to minimize or prevent the venting gas and/or flame from being directed toward the driver's side located above the battery pack 10.

Referring again to FIGS. 3 and 5 to 7, the above-described side frame 210 may include a distribution hole 212. At this time, the first path P1 may communicate with the cell accommodation portion S through the distribution hole 212. That is, the venting gas and/or flame may quickly flow into the first path P1 through the distribution hole 212 corresponding to both sides of the cell accommodation portion S where the battery cell 100 is accommodated.

Additionally, the floor frame 220 described above may include a venting hole 222. At this time, the second path P2 may communicate with the cell accommodation portion S through the venting hole 222. That is, the venting gas and/or flame may quickly flow into the second path P2 through the venting hole 222 corresponding to the lower part of the cell accommodation portion S where the battery cell 100 is accommodated. At this time, the venting gas and/or flame may flow into the second path P2, which is composed of two layers, through the venting hole 222.

According to this embodiment, simultaneous ignition of the plurality of battery cells 100 can be minimized or prevented by more stably guiding the flow of venting gas and/or flame to the venting path P.

Referring to FIGS. 6 and 7, the second path P2 may include an upper path P2a and a lower path P2b.

The upper path P2a may communicate with the cell accommodation portion S through the venting hole 222.

The lower path P2b is disposed below the upper path P2a and may be in communication with the upper path P2a.

Specifically, the upper path P2a may be configured to extend along the left and right directions (Y-axis direction) of the pack housing 200. Additionally, the lower path P2b may be configured to extend along the left and right directions of the pack housing 200. That is, the upper path P2a and the lower path P2b may form the upper and lower parts of the second path P2 in a vertically communicated form within the floor frame 220.

Accordingly, the venting gas and/or flame introduced into the second path P2 through the venting hole 222 may flow within the upper path P2a, and may also flow into the lower path P2b communicated with the upper path P2a and flow within the lower path P2b. Additionally, the venting gas and/or flame flowing within the lower path P2b may flow again to the upper path P2a and flow within the upper path P2a. Also, the flow direction of venting gas and/or flame within the upper path P2a may be in the same direction or in opposite directions to the flow direction of venting gas and/or flame within the lower path P2b, when viewed in the left and right directions (Y-axis direction) of the pack housing 200.

According to this embodiment, through the flow of venting gas and/or flame within two paths, the flow of venting gas and/or flame may be weakened, while increasing the contact time between the cooling module 300 and the venting gas and/or flame, thereby maximize the effect of cooling the venting gas and/or flame.

Additionally, since the second path P2 is composed of two paths, the reverse inflow of venting gas and/or flame into the cell accommodation portion S through the venting hole 222 may be limited.

Referring again to FIG. 6, the cooling module 300 may include a first cooling unit 310 and a second cooling unit 320.

The first cooling unit 310 may be a heat sink.

The second cooling unit 320 may be disposed on the opposite side of the first cooling unit 310 within the floor frame 220 with the upper path P2a interposed therebetween. That is, the first cooling unit 310 and the second cooling unit 320 may be arranged within the floor frame 220 with the upper path P2a interposed therebetween, when viewed in the front and rear directions (X-axis direction) of the pack housing 200.

Accordingly, some of the high temperature venting gas and/or flame introduced into the second path P2 may be cooled between the first cooling unit 310 and the second cooling unit 320.

According to this embodiment, the efficiency of cooling high temperature venting gas and/or flame by the cooling module 300 can be improved.

Referring again to FIGS. 6 and 7, the lower path P2b of the second path P2 may be disposed below the cooling module 300.

That is, the venting gas and/or flame cooled in the upper path P2a between the first cooling unit 310 and the second cooling unit 320 can be additionally cooled in the lower path P2b communicated with the upper path P2a. At this time, the lower path P2b may be located below the first cooling unit 310 and the second cooling unit 320.

According to this embodiment, since the venting gas and/or flame can be cooled even in the lower part of the cooling module 300, the effect of cooling the venting gas and/or flame can be maximized further by increasing the contact time between the cooling module 300 and the venting gas and/or flame.

Referring again to FIGS. 5 to 7, the electrode lead 110 of the battery cell 100 may be configured to face the venting path P. Specifically, the electrode lead 110 may be configured to face the first path P1 in the left and right directions (Y-axis direction) of the pack housing 200. Additionally, the electrode lead 110 may be configured to face the second path P2 in the upper and lower directions (Z-axis direction).

At this time, the venting hole 222 may be formed in an area on the floor frame 220 corresponding to the electrode lead 110.

That is, according to this embodiment, the venting hole 222 is not formed in an area on the floor frame 220 corresponding to the entire lower part of the battery cell 100, but formed only in a narrow area of the floor frame 220, especially at both sides in the left and right directions (Y-axis direction) (see FIG. 3).

Accordingly, in the event of thermal runaway of the battery cell 100, most of the venting gas and/or flame, which has strong straightness, may be introduced through the first path P1. Additionally, the venting gas and/or flame that does not flow into the first path P1 is introduced into the second path P2 through the venting hole 222, which has a relatively narrow area compared to the cell accommodation portion S, so that its flow may be weakened. In addition, the venting gas and/or flame introduced into the second path P2 through the venting hole 222, which has a relatively narrow area compared to the cell accommodation portion S, may be restricted from flowing back into the cell accommodation portion S.

In addition, since the venting gas and/or flame flows into the second path P2 through both left and right sides of the floor frame 220, the time during which high temperature venting gas and/or flame can be cooled by the cooling module 300 within the second path P2 may be increased.

According to this embodiment, the flow of venting gas and/or flame can be clearly weakened, and also the time of cooling the high temperature venting gas and/or flame can be increased. Accordingly, the rapid discharge of high temperature venting gas and/or flame to the outside of the pack housing 200 can be more clearly minimized or prevented.

Referring again to FIG. 6, the length of the venting hole 222 in the front and rear directions (X-axis direction) of the pack housing 200 can be configured to be shorter than the length of the upper path P2a in the front and rear directions of the pack housing 200.

In other words, the area of the venting hole 222 may be smaller than the area of the corresponding upper path P2a on the horizontal plane (XY plane). Accordingly, when the venting gas and/or flame passes through the venting hole 222, the flow speed of venting gas and/or flame within the upper path P2a may be slower than the flow speed of venting gas and/or flame within the cell accommodation portion S.

According to this embodiment, the flow of venting gas and/or flame introduced into the upper path P2a can be more securely weakened, so the time of cooling the high temperature venting gas and/or flame by the cooling module 300 can be further increased.

In addition, since the flow of venting gas and/or flame introduced into the upper path P2a is weakened, the flow of venting gas and/or flame within the lower path P2b communicated with the upper path P2a may also be weakened.

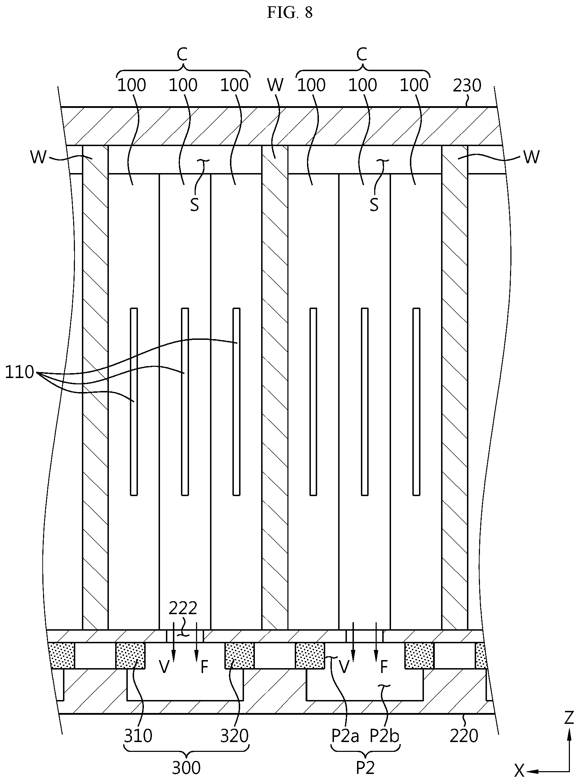

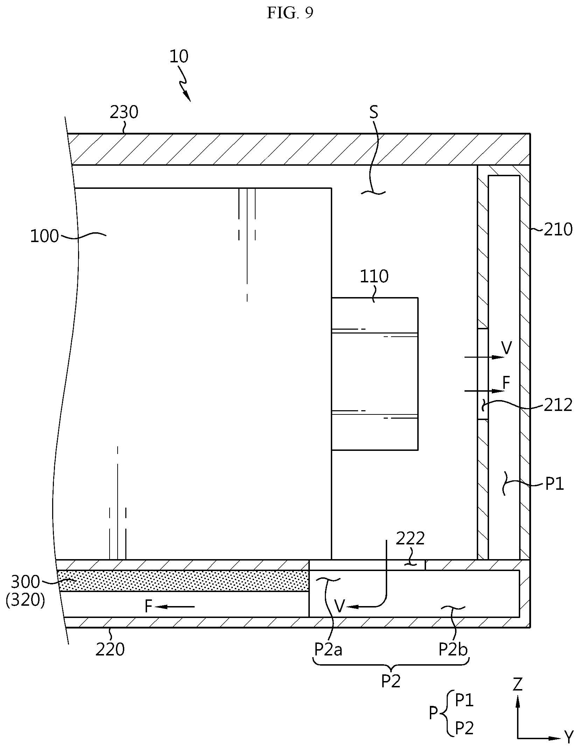

FIGS. 8 and 9 are diagrams illustrating a state in which venting gas or flame is emitted during thermal runaway of a battery cell 100 in the battery pack 10 according to an embodiment of the present disclosure. At this time, venting gas and flame, which will be described later in FIGS. 8 and 9, will be denoted by reference symbols 'V' and 'F', respectively.

Referring to FIGS. 2, 3, 8, and 9, the battery cell 100 may be provided in plurality. Additionally, the cell accommodation portion S may be provided in plurality. At this time, the plurality of cell accommodation portions S may be configured independently.

At this time, the battery cell 100 may be accommodated in the cell accommodation portion S, respectively. Meanwhile, the cell accommodation portion S may accommodate the cell assembly C having two or more battery cells 100.

Also, the pack housing 200 may include plurality of barriers W. Both sides of the barrier W may be connected to the side frame 210. At this time, both ends in the left and right directions (Y-axis direction) of the barrier W may be coupled to the side frame 210 disposed along the front and rear directions (X-axis direction) of the pack housing 200 among the side frames 210. Additionally, the barrier W may be formed to extend in the upper and lower directions to correspond to the height of the side frame 210. Additionally, the floor frame 220 may be coupled to the lower side of the barrier W, and the upper cover 230 may be coupled to the upper side of the barrier W.

In addition, the barrier W may be in close contact with the front and rear surfaces of the battery cell 100 to seal the plurality of cell accommodation portions S from each other, when viewed in the front and rear directions (X-axis direction) of the pack housing 200. Meanwhile, when the cell assembly C is accommodated within each cell accommodation portion S, the barrier W may be in close contact with the front and rear surfaces of the cell assembly C.

At this time, the distribution hole 212 of the side frame 210 and the venting hole 222 of the floor frame 220 may be configured to correspond to each cell accommodation portion S.

According to this configuration, simultaneous ignition between adjacent battery cells 100 can be suppressed more reliably, and also the battery cells 100 can be compactly arranged within the pack housing 200.

In addition, since the barrier W seals the space between adjacent cell accommodation portions S and the battery cell 100 comes into closer contact with the barrier W, the venting gas and/or flame can be guided to be introduced into the venting path P through the distribution hole 212 and the venting hole 222 more stably.

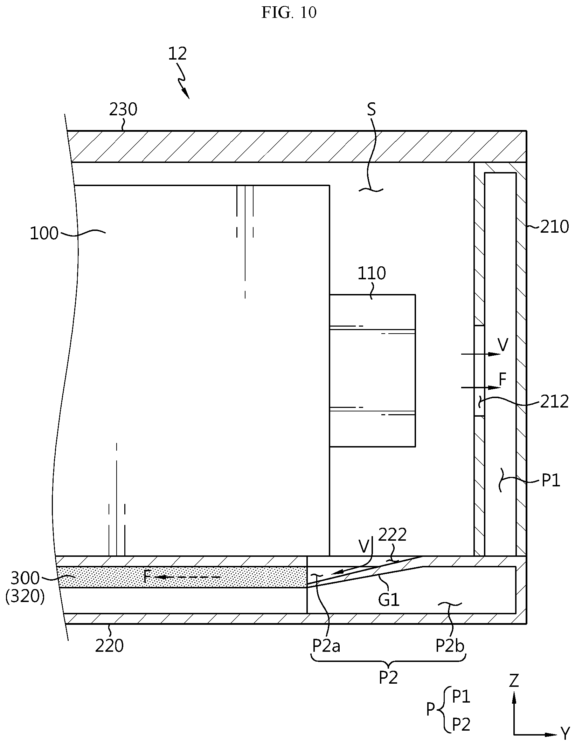

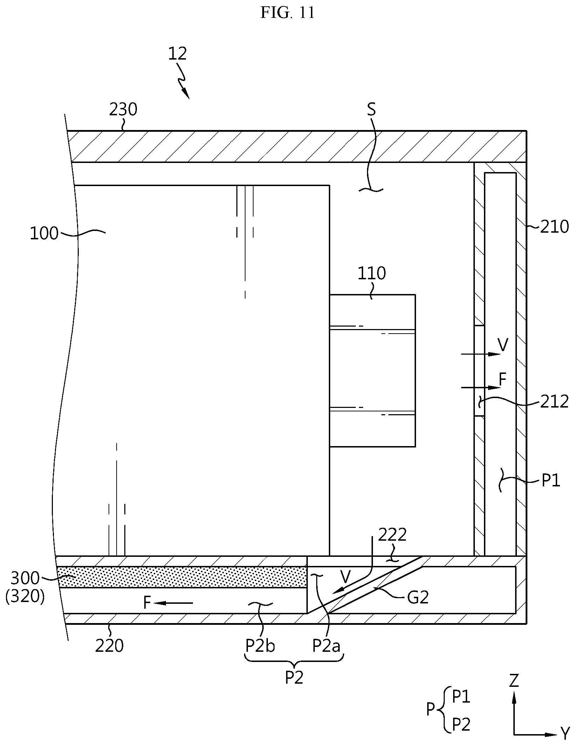

FIGS. 10 and 11 are diagrams showing a battery pack 12 according to the second embodiment of the present disclosure. At this time, venting gas and flame, which will be described later in FIGS. 10 and 11, will be denoted by reference symbols 'V' and 'F', respectively.

Since the battery pack 12 according to this embodiment is similar to the battery pack 10 of the previous embodiment, redundant descriptions of components substantially the same as or similar to those of the previous embodiment will be omitted, and differences from the previous embodiment will be described below.

Referring to FIGS. 10 and 11, in the battery pack 12, the pack housing 200 may further include a first guide portion G1 and a second guide portion G2.

As shown in FIG. 10, the first guide portion G1 may be formed by bending from a portion of the venting hole 222 toward the inside of the upper path P2a. Specifically, one end of the first guide portion G1 may be coupled to a portion of the venting hole 222 close to the side frame 210. Additionally, the first guide portion G1 may be formed by bending from one end connected to the venting hole 222 toward the inside of the upper path P2a.

As shown in FIG. 11, the second guide portion G2 may be formed by bending from another part of the venting hole 222 toward the inside of the lower path P2b. Specifically, one end of the second guide portion G2 may be coupled to a portion of the venting hole 222 close to the side frame 210. Additionally, the second guide portion G2 may be bent from one end connected to the venting hole 222 toward the inside of the lower path P2b so that the other end may be coupled to the lower surface of the lower path P2b.

The first guide portion G1 and the second guide portion G2 can provide more direction to the flow of venting gas and/or flame introduced into the second path P2 through the venting hole 222. In other words, the venting gas and/or flame introduced through the venting hole 222 can be guided through the first guide portion G1 and the second guide portion G2 and flow into the second path P2 more reliably.

In addition, a part of the venting gas and/or flame introduced through the venting hole 222 may be induced to flow directly to the upper path P2a through the first guide portion G1, and the remaining venting gas and/or flame may be induced to flow directly to the lower path P2b through the second guide portion G2. At this time, the venting gas and/or flame that is primarily induced to flow to the upper path P2a through the first guide portion G1 may flow secondarily to the lower path P2b. In addition, the venting gas and/or flame that is primarily induced to flow to the lower path P2b through the second guide portion G2 may flow secondarily to the upper path P2a.

By this embodiment, by diversifying the flow direction of the venting gas and/or flame within the second path P2, the flow of the flame within the second path P2 can be further weakened, and also the contact time of the venting gas and/or flame and the cooling module 300 can be further increased.

According to the battery pack 12 of this embodiment, the flow of venting gas and/or flame can be weakened while being guided more stably, and also the high temperature venting gas and/or flame can be cooled more reliably by the cooling module 300.

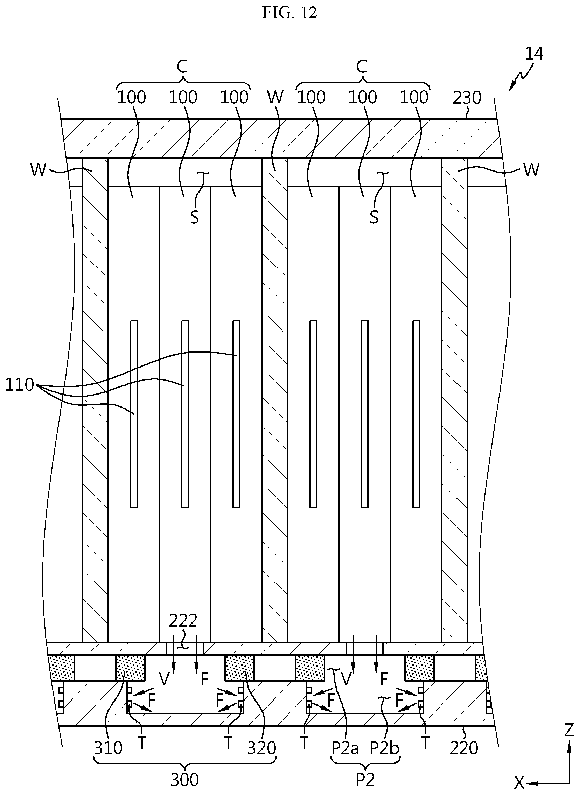

FIG. 12 is a diagram showing a battery pack 14 according to the third embodiment of the present disclosure. At this time, flame, which will be described later in FIG. 12, will be denoted by reference symbol 'F'.

Since the battery pack 14 according to this embodiment is similar to the battery pack 10 of the previous embodiment, redundant descriptions of components substantially the same as or similar to those of the previous embodiment will be omitted, and differences from the previous embodiment will be described below.

Referring to FIG. 12, in the battery pack 14, the pack housing 200 may further include a flow limiting portion T.

The flow limiting portion T may be provided on at least one of one side (X-axis direction one side) and the other side (X-axis direction the other side) of the lower path P2b. Specifically, the flow limiting portion T may be provided on at least one of the inner surfaces of the lower path P2b in the X-axis direction, and at least one flow limiting portion T may be provided in the form of protrusion.

This flow limiting portion T may be configured to collide with particles contained in the flame emitted from the battery cell 100.

In other words, the flame introduced into the upper path P2a through venting hole 222 can be initially weakened while flowing within the upper path P2a. Additionally, the flame introduced into the upper path P2a can be primarily cooled by the cooling module 300. In this way, the flame whose flow is primarily weakened within the upper path P2a can be further weakened secondarily through the flow limiting portion T within the lower path P2b.

According to the battery pack 14 of this embodiment, since the flame discharged from battery cell 100 may collide with the protrusion-shaped flow limiting portion T, the flow of the flame within the second path P2 may be further weakened. Accordingly, the time of cooling the flame by the cooling module 300 can be increased by increasing the residual time of the flame within the second path P2.

In addition, by allowing the particles contained in the flame to remain in the second path P2 by the flow limiting portion T, the discharge of ignition sources to the outside of the pack housing 200 can be further minimized.

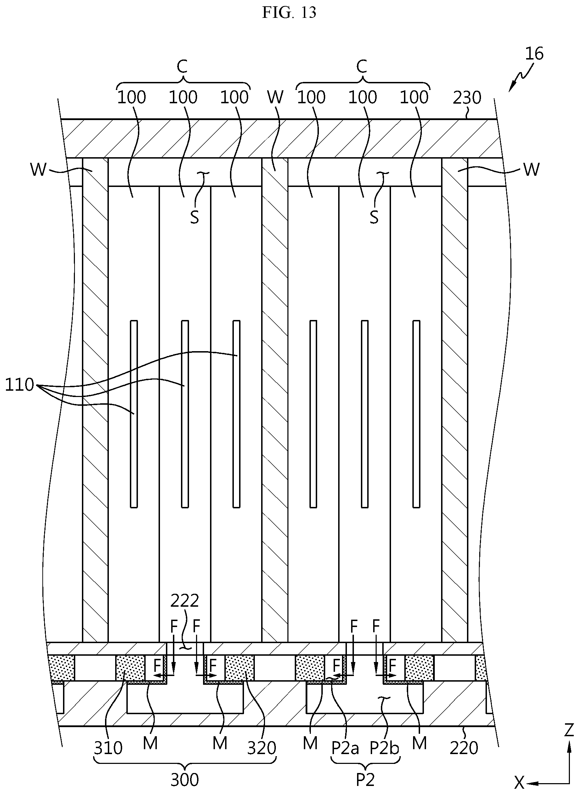

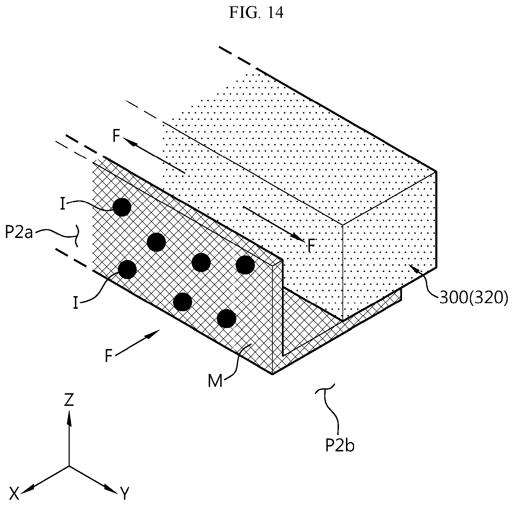

FIGS. 13 and 14 are diagrams showing a battery pack 16 according to the fourth embodiment of the present disclosure. At this time, flame, which will be described later in FIGS. 13 and 14, will be denoted by reference symbol 'F'. In addition, particles, which will be described later in FIG. 14, will be denoted by reference symbol 'I'.

Since the battery pack 16 according to this embodiment is similar to the battery pack 10 of the previous embodiment, redundant descriptions of components substantially the same as or similar to those of the previous embodiment will be omitted, and differences from the previous embodiment will be described below.

Referring to FIGS. 13 and 14, in the battery pack 16, the pack housing 200 may further include a filtering portion M. At this time, FIG. 14 schematically shows a state in which the flame is cooled by the cooling module 300 after particles contained in the flame are filtered in the filtering portion M of FIG. 13.

The filtering portion M is provided in the second path P2 and may be configured to filter particles contained in the flame. Additionally, the filtering portion M may be configured to face the cooling module 300. As an example, the filtering portion M may be configured in the form of a mesh in which a plurality of fine holes are formed.

Specifically, the filtering portion M may be configured as a pair to face the first cooling unit 310 and the second cooling unit 320 in the front and rear directions (X-axis direction) of the pack housing 200, respectively.

More specifically, the filtering portion M may be configured to surround the cooling module 300 within the upper path P2a and the lower path P2b. That is, the filtering portion M may be configured to face the first cooling unit 310 or the second cooling unit 320 within the upper path P2a and the lower path P2b and to surround the first cooling unit 310 or the second cooling unit 320.

As shown in FIGS. 13 and 14, this filtering portion M can primarily filter particles contained in the flame. Also, the flame from which large particles are filtered by the filtering portion M can be secondarily cooled through the cooling module 300.

According to the battery pack 16 of this embodiment, the process of filtering particles of the flame by the filtering portion M and the process of cooling the flame by the cooling module 300 can be performed sequentially, so the effect of cooling the flame by the cooling module 300 can be further improved.

In addition, by filtering particles contained in the flame through the filtering portion M, the discharge of ignition sources to the outside of the pack housing 200 can be further minimized.

Meanwhile, the battery pack 10, 12, 14, 16 according to the present disclosure can be applied to vehicles such as electric vehicles. In other words, the vehicle according to the present disclosure may include at least one battery pack 10, 12, 14, 16 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

On the other hand, in the present disclosure, terms indicating directions such as up, down, left, right, front, and back are used, but it is obvious to those skilled in the art of the present disclosure that these terms are only for convenience of explanation and they may vary depending on the location of the target object or the location of the observer.

## Claims

1. A battery pack, comprising:
a battery cell (100);
a pack housing (200) configured to accommodate the battery cell (100) within a cell accommodation portion (S) and have a venting path (P) including a first path (P1) and a second path (P2), **the second path (P2) being composed of two** paths, the first path (P1) and the second path (P2) being in communication with the cell accommodation portion (S) at a side and a lower part of the pack housing (200), respectively; and
a cooling module (300) provided to the lower part of the pack housing (200) and configured to cool a venting gas or flame discharged from the battery cell (100) and introduced into the second path (P2),
wherein the pack housing (200) includes:
a side frame (210) configured to constitute the side of the pack housing (200) and have the first path (P1) that communicates with the cell accommodation portion (S) through a distribution hole (212); and
a floor frame (220) connected to the side frame (210) and configured to constitute the lower part of the pack housing (200) and have the second path (P2) that communicates with the cell accommodation portion (S) through a venting hole (222),
wherein the second path (P2) includes:
an upper path (P2a) configured to communicate with the cell accommodation portion (S) through the venting hole (222); and
a lower path (P2b) disposed below the upper path (P2a) and configured to communicate with the upper path (P2a) wherein the battery cell (100) has an electrode lead (110) provided on at least one side to face the venting path (P), and
wherein the venting hole (222) is formed in an area on the floor frame (220) corresponding to the electrode lead (110).

2. The battery pack according to claim 1, wherein the cooling module (300) includes:
a first cooling unit (310); and
a second cooling unit (320) disposed on the opposite side of the first cooling unit (310) within the floor frame (220) with the upper path (P2a) interposed therebetween.

3. The battery pack according to claim 1, wherein the lower path (P2b) is located below the cooling module (300).

4. The battery pack according to claim 1, wherein the length of the venting hole (222) in the front and rear directions of the pack housing (200) is shorter than the length of the upper path (P2a) in the front and rear directions of the pack housing (200).

5. The battery pack according to claim 1, wherein the pack housing (200) further includes:
a first guide portion (G1) formed by bending from a part of the venting hole (222) toward the inside of the upper path (P2a); and
a second guide portion (G2) formed by bending from another part of the venting hole (222) toward the inside of the lower path (P2b).

6. The battery pack according to claim 1, wherein the pack housing (200) further includes a flow limiting portion (T) provided on at least one of one side and the other side of the lower path (P2b) and configured to collide with particles contained in the flame, at least one flow limiting portion (T) being provided in the form of protrusion.

7. The battery pack according to claim 1, wherein the pack housing (200) further includes a filtering portion (M) provided within the second path (P2) and configured to filter particles contained in the flame, and
wherein the filtering portion (M) is configured to surround the cooling module (300) within the upper path (P2a) and the lower path (P2b).

8. The battery pack according to claim 1, wherein the battery cell (100) is provided in plurality, and the cell accommodation portion (S) is provided in plurality,
wherein the plurality of battery cells is accommodated within the plurality of cell accommodation portions, respectively, and
wherein the pack housing (200) further includes a plurality of barriers (W) having both sides connected to the side frame (210) and configured to be in close contact with the front or rear of any one of the plurality of battery cells to seal the plurality of cell accommodation portions from each other.

9. A vehicle, comprising at least one battery pack according to any one of claims 1 to 8.

## Patentansprüche

1. Ein Batteriepack, umfassend:
eine Batteriezelle (100);
ein Packgehäuse (200), das dazu ausgebildet ist, die Batteriezelle (100) innerhalb eines Zellenaufnahmeteils (S) aufzunehmen und einen Entlüftungspfad (P) aufzuweisen, der einen ersten Pfad (P1) und einen zweiten Pfad (P2) umfasst, wobei der zweite Pfad (P2) aus zwei Pfaden zusammengesetzt ist, und der erste Pfad (P1) und der zweite Pfad (P2) jeweils mit dem Zellenaufnahmeteil (S) an einer Seite und einem unteren Teil des Packgehäuses (200) in Verbindung stehen; und
ein Kühlmodul (300), das an dem unteren Teil des Packgehäuses (200) vorgesehen und dazu ausgebildet ist, ein aus der Batteriezelle (100) ausgetragenes und in den zweiten Pfad (P2) eingeleitetes Entlüftungsgas oder Flamme zu kühlen,
wobei das Packgehäuse (200) umfasst:
einen Seitenrahmen (210), der dazu ausgebildet ist, die Seite des Packgehäuses (200) zu bilden und den ersten Pfad (P1) aufzuweisen, der durch ein Verteilungsloch (212) mit dem Zellenaufnahmeteil (S) kommuniziert; und
einen Bodenrahmen (220), der mit dem Seitenrahmen (210) verbunden und dazu ausgebildet ist, den unteren Teil des Packgehäuses (200) zu bilden und den zweiten Pfad (P2) aufzuweisen, der durch ein Entlüftungsloch (222) mit dem Zellenaufnahmeteil (S) kommuniziert,
wobei der zweite Pfad (P2) umfasst:
einen oberen Pfad (P2a), der dazu ausgebildet ist, durch das Entlüftungsloch (222) mit dem Zellenaufnahmeteil (S) zu kommunizieren; und
einen unteren Pfad (P2b), der unterhalb des oberen Pfads (P2a) angeordnet und dazu ausgebildet ist, mit dem oberen Pfad (P2a) zu kommunizieren,
wobei die Batteriezelle (100) einen Elektrodenträger (110) aufweist, der auf mindestens einer Seite vorgesehen ist, um dem Entlüftungspfad (P) zugewandt zu sein, und
wobei das Entlüftungsloch (222) in einem Bereich auf dem Bodenrahmen (220) gebildet ist, der dem Elektrodenträger (110) entspricht.

2. Batteriepack nach Anspruch 1, wobei das Kühlmodul (300) umfasst:
eine erste Kühleinheit (310); und
eine zweite Kühleinheit (320), die auf der gegenüberliegenden Seite der ersten Kühleinheit (310) innerhalb des Bodenrahmens (220) angeordnet ist, wobei der obere Pfad (P2a) dazwischen angeordnet ist.

3. Batteriepack nach Anspruch 1, wobei der untere Pfad (P2b) unterhalb des Kühlmoduls (300) angeordnet ist.

4. Batteriepack nach Anspruch 1, wobei die Länge des Entlüftungslochs (222) in der vorderen und hinteren Richtung des Packgehäuses (200) kürzer ist als die Länge des oberen Pfads (P2a) in der vorderen und hinteren Richtung des Packgehäuses (200).

5. Batteriepack nach Anspruch 1, wobei das Packgehäuse (200) ferner umfasst:
einen ersten Führungsabschnitt (G1), der durch Biegen eines Teils des Entlüftungslochs (222) in das Innere des oberen Pfads (P2a) gebildet wird; und
einen zweiten Führungsabschnitt (G2), der durch Biegen eines anderen Teils des Entlüftungslochs (222) in das Innere des unteren Pfads (P2b) gebildet wird.

6. Batteriepack nach Anspruch 1, wobei das Packgehäuse (200) ferner einen Strömungsbegrenzungsabschnitt (T) umfasst, der an mindestens einer von einer Seite und der anderen Seite des unteren Pfads (P2b) vorgesehen und dazu ausgebildet ist, mit in der Flamme enthaltenen Partikeln zu kollidieren, wobei mindestens ein Strömungsbegrenzungsabschnitt (T) in Form eines Vorsprungs vorgesehen ist.

7. Batteriepack nach Anspruch 1, wobei das Packgehäuse (200) ferner einen Filterabschnitt (M) umfasst, der innerhalb des zweiten Pfads (P2) vorgesehen und dazu ausgebildet ist, in der Flamme enthaltene Partikel zu filtern, und
wobei der Filterabschnitt (M) dazu ausgebildet ist, das Kühlmodul (300) innerhalb des oberen Pfads (P2a) und des unteren Pfads (P2b) zu umgeben.

8. Batteriepack nach Anspruch 1, wobei die Batteriezelle (100) in einer Vielzahl vorgesehen ist und der Zellenaufnahmeteil (S) in einer Vielzahl vorgesehen ist,
wobei die Vielzahl von Batteriezellen jeweils innerhalb der Vielzahl von Zellenaufnahmeteilen aufgenommen ist, und
wobei das Packgehäuse (200) ferner eine Vielzahl von Barrieren (W) umfasst, deren beide Seiten mit dem Seitenrahmen (210) verbunden und dazu ausgebildet sind, in engem Kontakt mit der Vorder- oder Rückseite einer beliebigen aus der Vielzahl von Batteriezellen zu stehen, um die Vielzahl von Zellenaufnahmeteilen voneinander abzudichten.

9. Fahrzeug, umfassend mindestens einen Batteriepack nach einem der Ansprüche 1 bis 8.

## Revendications

1. Bloc-batterie, comprenant :
une cellule de batterie (100) ;
un boîtier de bloc (200) configuré pour loger la cellule de batterie (100) à l'intérieur d'une partie de logement de cellule (S) et pour avoir un chemin d'évent (P) incluant un premier chemin (P1) et un second chemin (P2), le second chemin (P2) étant composé de deux chemins, et le premier chemin (P1) et le second chemin (P2) étant en communication avec la partie de logement de cellule (S) au niveau d'un côté et d'une partie inférieure du boîtier de bloc (200), respectivement ; et
un module de refroidissement (300) prévu sur la partie inférieure du boîtier de bloc (200) et configuré pour refroidir un gaz d'évent ou une flamme déchargé(e) de la cellule de batterie (100) et introduit(e) dans le second chemin (P2),
dans lequel le boîtier de bloc (200) inclut :
un cadre latéral (210) configuré pour constituer le côté du boîtier de bloc (200) et pour avoir le premier chemin (P1) qui communique avec la partie de logement de cellule (S) par l'intermédiaire d'un trou de distribution (212) ; et
un cadre de plancher (220) connecté au cadre latéral (210) et configuré pour constituer la partie inférieure du boîtier de bloc (200) et pour avoir le second chemin (P2) qui communique avec la partie de logement de cellule (S) par l'intermédiaire d'un trou d'évent (222),
dans lequel le second chemin (P2) inclut :
un chemin supérieur (P2a) configuré pour communiquer avec la partie de logement de cellule (S) par l'intermédiaire du trou d'évent (222) ; et
un chemin inférieur (P2b) disposé en dessous du chemin supérieur (P2a) et configuré pour communiquer avec le chemin supérieur (P2a),
dans lequel la cellule de batterie (100) a une électrode (110) prévue sur au moins un côté pour faire face au chemin d'évent (P), et
dans lequel le trou d'évent (222) est formé dans une zone sur le cadre de plancher (220) correspondant à l'électrode (110).

2. Bloc-batterie selon la revendication 1, dans lequel le module de refroidissement (300) inclut :
une première unité de refroidissement (310) ; et
une seconde unité de refroidissement (320) disposée sur le côté opposé de la première unité de refroidissement (310) à l'intérieur du cadre de plancher (220) avec le chemin supérieur (P2a) interposé entre elles.

3. Bloc-batterie selon la revendication 1, dans lequel le chemin inférieur (P2b) est situé en dessous du module de refroidissement (300).

4. Bloc-batterie selon la revendication 1, dans lequel la longueur du trou d'évent (222) dans les directions avant et arrière du boîtier de bloc (200) est plus courte que la longueur du chemin supérieur (P2a) dans les directions avant et arrière du boîtier de bloc (200).

5. Bloc-batterie selon la revendication 1, dans lequel le boîtier de bloc (200) inclut en outre :
une première partie de guidage (G1) formée par pliage d'une partie du trou d'évent (222) vers l'intérieur du chemin supérieur (P2a) ; et
une seconde partie de guidage (G2) formée par pliage d'une autre partie du trou d'évent (222) vers l'intérieur du chemin inférieur (P2b).

6. Bloc-batterie selon la revendication 1, dans lequel le boîtier de bloc (200) inclut en outre une partie de limitation de flux (T) prévue sur au moins un côté parmi un côté et l'autre côté du chemin inférieur (P2b) et configurée pour entrer en collision avec des particules contenues dans la flamme, au moins une partie de limitation de flux (T) étant prévue sous la forme d'une saillie.

7. Bloc-batterie selon la revendication 1, dans lequel le boîtier de bloc (200) inclut en outre une partie de filtration (M) prévue à l'intérieur du second chemin (P2) et configurée pour filtrer des particules contenues dans la flamme, et
dans lequel la partie de filtration (M) est configurée pour entourer le module de refroidissement (300) à l'intérieur du chemin supérieur (P2a) et du chemin inférieur (P2b).

8. Bloc-batterie selon la revendication 1, dans lequel la cellule de batterie (100) est prévue en pluralité, et la partie de logement de cellule (S) est prévue en pluralité, dans lequel la pluralité de cellules de batterie est logée à l'intérieur de la pluralité de parties de logement de cellule, respectivement, et
dans lequel le boîtier de bloc (200) inclut en outre une pluralité de barrières (W) ayant les deux côtés connectés au cadre latéral (210) et configurées pour être en contact étroit avec l'avant ou l'arrière de l'une quelconque de la pluralité de cellules de batterie pour isoler la pluralité de parties de logement de cellule les unes des autres.

9. Véhicule, comprenant au moins un bloc-batterie selon l'une quelconque des revendications 1 à 8.
